# EUROPEAN PATENT SPECIFICATION

(11) **EP 4 186 467 B1**
(45) Date of publication and mention of the grant of the patent: **09.07.2025**
(21) Application number: 21765679.2
(22) Date of filing: 23.07.2021
(51) Int. Cl.: A61C 17/06, A61C 1/00

(54) **DENTAL SUCTION DEVICE, AND DENTAL SUCTION DEVICE AND INSTRUMENT ASSEMBLY**
ZAHNÄRZTLICHE ABSAUGVORRICHTUNG SOWIE ZAHNÄRZTLICHE ABSAUGVORRICHTUNG UND INSTRUMENTENANORDNUNG
DISPOSITIF D'ASPIRATION DENTAIRE ET ENSEMBLE DISPOSITIF D'ASPIRATION ET INSTRUMENT DENTAIRE

(30) Priority: 23.07.2020 ES 202030768
(43) Date of publication of application: 31.05.2023
(73) Proprietor: Badia Lloret, S.L., 08028 Barcelona Barcelona (ES)
(72) Inventor: BADIA FARRÉ, Jorge, 08028 BARCELONA (ES)
(74) Representative: Vidal, Maria Mercé
(86) International application number: PCT/ES2021/070560
(87) International publication number: WO 2022/018320

(56) References cited:
- WO-A1-2019/236968
- WO-A1-92/19315
- WO-A1-94/00078
- WO-A1-96/12447
- US-A- 5 122 153
- US-A- 5 531 722
- US-A1- 2003 073 054

## Description

The present invention relates to a dental suction device suitable for suctioning aerosols and deflections of cooling fluid produced by the effect of a dental instrument such as a dental turbine, dental contra-angle handpiece or dental laser, when said instrument acts on the surface of the teeth in the oral cavity of a patient. It also refers to an assembly for a dental suction device and dental instrument.

### Background of the invention

A dental turbine, or a dental contra-angle handpiece, is a dental milling instrument comprising a working head with a bur rotating at a speed of 100,000 to 500,000 revolutions per minute for milling hard tissues of the teeth, such as enamel or prosthetic material. The dental laser is another type of dental instrument which in this case uses a laser tip, instead of a bur, to ablate the aforementioned hard tissues.

Conventional dental turbines, contra-angle handpieces and lasers incorporate an air and water irrigation system to cool the heat produced by the friction of the drill or laser on the teeth. This cooling fluid is necessary to prevent the pulp of the tooth from overheating, and also helps to release the milled material or material resulting from the ablation, to improve visibility of the working area. However, the effect of the air jet and the cooling water on dental tissues produces suspensions of tiny particles of solids and liquids (aerosols) that are a source of disease transmission for the patient and the operator. In the case of dental lasers, in addition to the aerosol effect of the cooling fluid, there is also the effect that the laser energy produces on the water in the tissues, creating micro-explosions that project energetic particle plumes resulting from the ablation caused by the laser mixed with bacteria, viruses and multiple blood by-products.

It is well known that fluid deflections and aerosols generated during daily dental work pose a risk to both the health of the operator and patients, as they are a source of transmission of diseases and pathogens to which professionals are continuously exposed. In particular, it must be taken into account that aerosols can remain in suspension in the dental surgery environment for a time of more than four hours, which significantly increases the risk of disease transmission. This was clearly demonstrated during the SARS-CoV-2 pandemic crisis.

Dental turbines are known which incorporate in the turbine casing itself suction means for sucking into the oral cavity mainly cooling liquid and milling debris produced by the effect of the turbine's drill. Patent US 5,342,196 A discloses a dental turbine of this type in which the casing body of the turbine itself defines a first aerosol suction cavity and a second cavity for accommodating supply ducts for pressurised air and cooling fluid. Dental instruments such as those described in the aforementioned patent have the drawback that suction of fluid deflections and aerosols is limited to the vicinity of the area of action of the drill or laser, so that a significant percentage of ejections cannot be suctioned and are released into the environment of the box. In addition, the fluid suction flow rate provided by these dental instruments is also very poor, and clearly insufficient to ensure effective absorption of the fluid deflections and aerosols that are generated inside the patient's oral cavity.

Dental suction devices, such as the one described in US 2003/073054 A1 or US 5,531,722 A, are known, which can be removably attached to a tartrectomy device such as an ultrasonic scaler, which is used to remove tartar by means of ultrasonic vibrations. These devices also use a water irrigation system, in this case without air, the water being nebulised by the back-and-forth movement of the ultrasonic tip in a direction perpendicular to the longitudinal axis of the ultrasonic tip. Dental suction devices such as the one described in the aforementioned patent include a suction body which covers the ultrasonic tip by way of a screen to aspirate the liquid nebulised by the vibration. However, these devices are not suitable for absorbing the fluid deflections produced by the effect of a drill or laser but are only useful for absorbing the water mist generated by the vibration of the ultrasonic tip.

### Description of the invention

The aim of the present invention is to solve the aforementioned drawbacks by providing a dental suction device with the advantages that will be described below.

In accordance with this objective, according to a first aspect, the present invention provides a dental suction device suitable to be coupled to a dental instrument provided with a drill or laser tip and injection means for injecting under pressure a jet of cooling fluid comprising a mixture of air and water. This device comprises suction means for sucking into the oral cavity fluid deflections and aerosols produced by the effect of the drill or laser of the dental instrument and attaching means for removably attaching the said device to said dental instrument.

The device is characterised in that the suction means comprises a tubular fluid suction body forming a first outer cavity or outer housing intended to receive a dental instrument working head, wherein a distal tubular portion of the tubular suction body extends, for example radially, so as to at least partially surround the perimeter of the first outer cavity or outer housing in which the dental instrument working head is housed, and wherein a wall of said distal tubular body portion incorporates at least one suction orifice arranged so as to determine a perimeter area of fluid suction in an upward direction that at least partially surrounds the first outer cavity or outer housing for receiving the working head, said distal tubular body portion being sized so that it can be introduced inside the patient's mouth while the working head of the dental instrument is operative.

The claimed device has the advantage of having a tubular suction body whose outer walls form a first outer cavity or outer housing designed to receive the head that supports the dental instrument's bur or laser, so that the head, instead of being housed inside the tubular suction body, is located on the outside surrounded by the suction body itself, which greatly facilitates the handling of the device, constituting an accessory complement to the turbine, dental contra-angle handpiece or dental laser. In addition, the distal tubular portion of the suction body extends radially so that it surrounds the cavity or housing where the head is housed, and forms a wall incorporating one or more peripheral upward suction orifices. The position of the suction orifices is adapted to the trajectory of fluid deflections and ejections of liquids and solids generated inside the oral cavity by the effect of the drill or laser.

Unlike the devices of the prior art, the device of the present invention allows fluid deflections and aerosols to be absorbed almost entirely and much more efficiently inside the circumferential area where they occur. In fact, the dental turbines with suction existing in the state of the art incorporate narrow fluid suction channels inside their casing that generate fluid turbulences that cause a markedly deficient suction. In the device of the present invention, the enlarged perimeter area of upward suction provided on the wall of the distal portion of the tubular body is arranged in such a way that it can approach the perimeter of action of the drill or laser to take advantage of the suction strength, without producing undesirable turbulences, while also covering practically the whole area where the deflections are generated. In particular, in the claimed device, the fluid deflections generated by the water and air spray jet when bouncing are effectively sucked away due to the proximity that the suction orifices can acquire to the place where this happens, and due to the barrier effect generated by the enlarged peripheral suction area provided in the distal portion of the tubular body.

The claimed device generates a circumferential suction effect designed so that, in proximity to working surfaces, the flow of spray (a mixture of air and water) injected is transformed by the effect of the suction into a stable toroidal vortex at the centre of which is the bur or laser tip. Thanks to the stability provided by the fluid movement within the toroidal vortex, the aerosol produced is very efficiently confined. In particular, the at least one suction orifice is provided in the wall of the distal tubular portion in such a way as to determine a peripheral area of fluid suction in an upward direction substantially parallel to the axis of the drill or laser tip of the dental instrument. In fact, the upward suction is in the opposite direction to the downward jet of spray (air/water mixture) that accompanies the drill or laser tip of the dental instrument.

Preferably, the suction means of the device provides an air suction flow rate greater than the flow rate of water and air injected by the turbine. Thus, when the device is in operation, the laminar flow of incoming outside air creates a reverse curtain effect that helps to confine the turbulence of fluid deflections within the perimeter surrounding the outside cavity.

Surprisingly, the configuration of the distal portion of the tubular body that extends radially so that it surrounds the first outer cavity or outer housing where the working head of the dental instrument is housed allows high air suction flow rates to be applied, without affecting the cooling effect of the water/air mixture injected on the drilled or ablated tissues.

According to one embodiment, the wall of the distal portion of the tubular body incorporating the at least one fluid suction orifice extends radially outwards from the first outer cavity or outer housing for receiving the working head of the dental instrument with a width determined by a distance "d". This distance "d" is sized so as to absorb fluid deflections that form an angle "α" between 30° and 60° with the axis of the drill or laser of the dental instrument head.

The device of the present invention has the advantage that the distal portion of the tubular body extends radially so that the tubular body itself surrounds the cavity or receiving housing of the working head, incorporating one or more orifices that determine a perimeter area of upward suction suitable for absorbing violent deflections of fluid which, in devices of the prior art, escape the area of action of the turbine or laser suction system.

Advantageously, the wall of the distal portion of the tubular body incorporating at least one perimeter fluid suction orifice extends radially outward from the outer receiving cavity or housing of the working head a distance "d" equal to or greater than 2 mm, preferably a distance "d" between 3 mm and 9 mm, for example, a distance between 4 mm and 8 mm.

According to one embodiment, the tubular body further forms a second outer cavity or housing intended to receive a dental instrument working head support neck or handle, the distal portion of the tubular body extending radially on both sides of said second outer cavity for receiving the working head support neck, and the wall of the distal portion of the tubular body also incorporating one or more suction orifices on both sides of the second outer cavity for receiving the support handle.

This embodiment has the advantage that it allows the upward suction perimeter area to extend towards the rear of the distal portion of the tubular body, thus preventing aerosol leakage through the rear of the instrument while the instrument is in operation.

In particular, advantageously, the suction body is a tubular body comprising;
- a proximal tubular portion forming the second outer housing intended to receive the working head support handle of the dental instrument, and
- the distal tubular portion at least partially surrounding the perimeter of the first outer receiving housing of the working head.

Preferably, the distal tubular portion extends on both sides of the second outer housing for receiving the handle, in correspondence with the neck of the handle, so that it at least partially surrounds the perimeter of both the outer cavities or outer housings for receiving the working head and the support neck of the working head. The wall of the distal tubular portion, on both sides of the second outer housing, also incorporates one or more suction orifices.

The proximal portion of the tubular body can be attached or coupled to the handle of a conventional dental turbine or laser by means of a clamp or by means of a clipping or press-fit system. For example, the clipping attachment system comprises one or more projections of the proximal portion of the tubular body that fit into the turbine or laser support handle to secure the attachment of the device to the dental instrument.

Advantageously, the peripheral area of upward fluid suction determined by one or more fluid suction orifices increases or decreases towards the more distal end of the tubular body of the device.

According to one embodiment, the distal portion of the tubular body extends radially forming a bifurcation of tubular bodies creating an intermediate hollow space intended to define the first outer cavity or outer housing for receiving the working head of the dental instrument, said outer cavity or housing including an access hole for accessing the button on the upper part of the working head and allowing a change of turbine or contra-angle drill, without the need to uncouple the head of the device from the dental instrument. In addition, this access hole allows heads of different heights to be accommodated without altering the fit of the dental instrument in the device.

This bifurcation defines two tubular bodies in the form of branches of the suction tubular body that extend radially such that each one surrounds a portion of the perimeter of the first outer cavity or outer housing in which the dental drill or laser support head is housed. Each of these tubular bodies or branches includes a wall incorporating one or more upward perimeter suction orifices whose position adapts to the trajectory of the fluid deflections and ejections of liquids and solids generated inside the oral cavity by the effect of the turbine or laser.

According to one embodiment, the distal portion of the tubular body incorporates a plurality of upward fluid suction orifices arranged to extend peripherally around both the outer receiving cavities of the working head and the support neck of said working head. These orifices may be configured, for example, as one or more through slots provided in the bottom wall of the distal portion of the tubular body. Advantageously, the cross-section of these through orifices or slots determines a fluid passage in the bottom wall of the distal portion of the tubular body equal to or greater than 1 mm, and a perimeter area of upward suction approaching or exceeding 50 mm².

According to one embodiment, a cross-section of these through orifices or slots, in particular, the cross-section of the through orifices or slots extending at least partially on both sides of the perimeter of the second outer housing that receives the neck of the handle, includes walls of the orifices oriented vertically in a radial direction, towards the area where deflections would tend to escape. The orientation of these walls, together with the extension of the through slots towards the second outer housing, has been found to help maintain the toroidal vortex stable with its centre at the laser tip or drill, also confining the escape of aerosol in this area.

Again advantageously, the tubular body lumen has a decreasing area from the proximal portion of the tubular body towards the distal portion of the tubular body. In this way, the suction strength remains stable. Additionally, the dimensions of the distal tubular body portion are small and suitable for convenient handling of the device inside the oral cavity.

Preferably, the dental suction device comprises a vacuum source and means for connecting said vacuum source to the suction tubular body. This source is suitable for providing standard vacuum values in dental suction systems, for example, of about 160 millibars.

According to a second aspect, the present invention provides a dental suction device and instrument assembly comprising a device as claimed, and a dental turbine or dental contra-angle handpiece provided with injection means for injecting under pressure a jet of cooling fluid and/or spray (air/water mixture) capable of producing aerosols comprising milled particles in suspension from tooth tissues.

According to a third aspect, the present invention provides a dental suction device and dental instrument assembly comprising a device as claimed, and a dental laser provided with injection means for injecting under pressure a jet of cooling fluid and/or spray (mixture of air and water) capable of producing aerosols comprising plumes of particles resulting from the ablation effect produced by the laser tip on the tooth tissues.

Advantageously, the turbine, dental contra-angle handpiece or dental laser used with the claimed device are conventional commercially available instruments, and the first cavity or outer housing formed by the tubular body of the device is adapted to receive a working head of said turbine or dental laser.

In the present invention, a dental turbine or dental contra-angle handpiece refers to an instrument having a working head comprising a rotor that drives a drill. The rotor is preferably driven by air compression, in the case of the turbine, or by an electric micromotor, in the case of the dental contra-angle handpiece, at a speed ranging in the case of the turbine between 100,000 and 500,000 revolutions per minute and, in the case of the contra-angle handpiece, between 20,000 and 200,000 revolutions per minute. Both the turbine and the dental contra-angle handpiece include injecting means for injecting a jet of pressurised water and air to compensate for the heat produced by the friction of the drill.

The term dental laser refers to an instrument with a working head including a laser tip, preferably an Erbium or Erbium-Chromium laser capable of ablating hard tissues. The dental laser also includes injecting means for injecting a jet of water and pressurised air to compensate for the heat produced by the ablation of the tissue.

### Brief description of the drawings

To facilitate the description of what has been described above, drawings are appended which represent, schematically and only by way of non-limiting example, a practical case of realisation of the dental suction device and of an assembly of dental suction device and dental turbine to which said device is coupled.
Figure 1 is an axonometric lower view of an embodiment of the tubular suction body of the dental suction device showing the proximal and distal portion of the suction body.
Figure 2 is an axonometric side view of the suction tubular body of figure 1.
Figure 3 is an axonometric top view of the suction tubular body of figure 1.
Figure 4 is a wireframe style axonometric top view of an assembly of the tubular suction body assembly of figure 1 and a dental turbine.
Figure 5 is a wireframe style axonometric lower view of the tubular suction body and dental turbine assembly of figure 4.
Figure 6 is a wireframe style isometric lower view of the tubular suction body of figure 1.
Figure 7 is a wireframe style isometric side view of the tubular suction body and dental turbine assembly of figure 4.
Figure 8 is a cross-section of the embodiment of the distal tubular portion of the suction body of figure 1 comprising suction orifices with walls oriented vertically in a radial direction.
Figure 9 is an axonometric top view of a second embodiment of the dental suction device.
Figure 10 is an axonometric lower view of the device of figure 9. This figure shows the housings that form the proximal and distal tubular portions of the suction body for receiving, respectively, the head and the handle of the dental instrument.
Figure 11 is a cross-section of the second embodiment of the distal tubular portion of the suction body of figure 9, at the height of the area surrounding the second outer housing that receives the neck of the turbine handle. This section includes suction orifices provided with walls oriented vertically in a radial direction at an angle β.
Figure 12 is a schematic representation showing the coupling operation of the dental instrument, in this case a dental turbine, in the device of the embodiment of figure 9. For the sake of clarity, this figure does not show the orifice provided as a through slot partially surrounding the housing for receiving the head and the handle of the turbine.
Figure 13 is a schematic representation of the claimed dental device and instrument assembly simulating the operation inside the oral cavity and the formation of the toroidal suction vortex with its centre at the bur of the dental instrument, in this case a dental turbine.
Figure 14 is a photo of the assembly shown in Figure 12 in operation.

### Description of the preferred embodiments

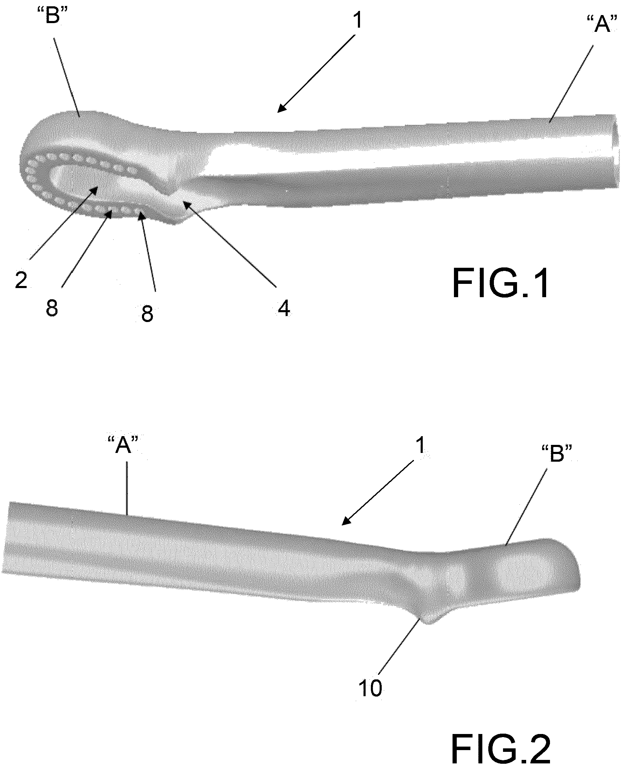

In what follows, two embodiments of the dental suction device of the present invention are described with reference to figures 1 to 14.

The claimed dental suction device comprises suction means comprising a suction body 1, which is preferably a tubular body, capable of being connected to a vacuum source (not shown) suitable for providing preferably a vacuum equal to or greater than 100 millibars, for example, 160 millibars.

The outer walls of the tubular suction body 1 form a first outer cavity or housing 2 intended to receive a working head 3 of a dental instrument, and a second outer cavity or housing 4 intended to receive the handle 5 supporting the working head 3 of said dental instrument. In the embodiments described and shown in the figures, the outer cavities, or housings 2 and 4 of the tubular body 1 are shaped to receive a working head 3 and handle 5 of a dental instrument which, in this case, is a dental turbine 6 fitted with a drill 6a. However, the same tubular body 1 could comprise outer cavities or outer housings adapted to receive the head of a laser and the handle of a dental laser, respectively.

The tubular suction body 1 includes a proximal tubular portion "A" capable of being removably attached to the support handle 5 of the dental instrument by means of a clamp or by means of a clipping system, and a distal tubular portion "B" sized so that it can be introduced in the oral cavity of a patient.

In the embodiments described, the distal tubular portion "B" extends radially so as to at least partially surround the perimeter of the first outer cavity or outer housing 2 receiving the dental instrument working head 3, as well as a portion of the perimeter of the second outer cavity or outer housing 4 that receives the neck of support handle 5 of the dental instrument working head 3.

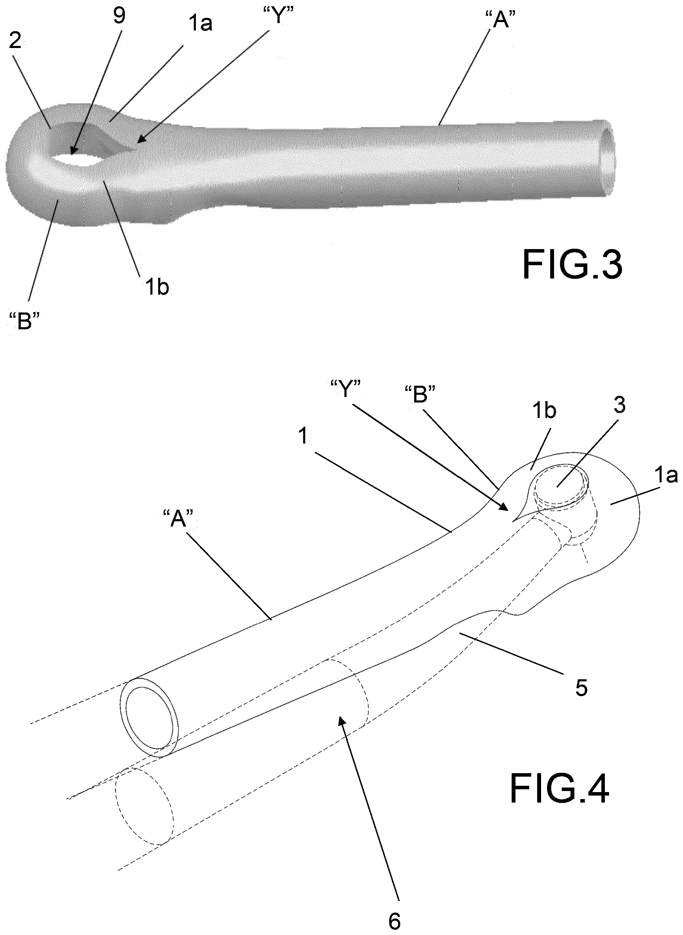

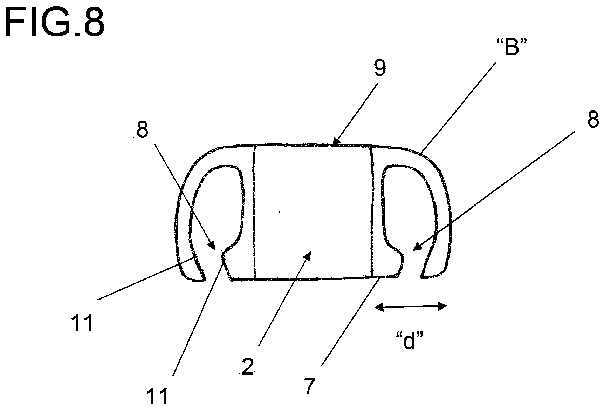

In particular, according to one embodiment, the distal tubular portion "B" of the suction tubular body 1 extends radially forming a bifurcation "Y" of tubular bodies 1a, 1b, in the form of branches, creating a hollow intermediate space defining the first outer cavity or outer housing 2 for the reception of the working head 3 of the dental instrument. As can be seen in Figures 3 and 4, and in figure 8, each of the bodies or branches 1a, 1b of the bifurcation "Y" of the distal portion "B" of the tubular body 1 extends to surround a perimeter portion of the first outer cavity or outer housing 2 of the dental instrument working head 3 and incorporates one or more suction orifices 8. The upper edge of the hollow intermediate space forms an access hole 9 which allows access to the upper part of the working head 3 where the button for clamping the drill 6a is located to allow changing the drill 6a, without the need to disengage the head 3 from the interior of the outer cavity or outer housing 2.

The figures of both embodiments of the device show a lower wall 7 of the distal tubular portion "B" of the suction body 1 which has the particularity that it extends radially outwards from both outer first and second outer cavities or outer housings 2 and 4 with a width determined by a distance "d", and incorporates the suction orifices 8 arranged so as to determine a perimeter area of upward suction of fluid around the outer cavities or outer housings 2 and 4.

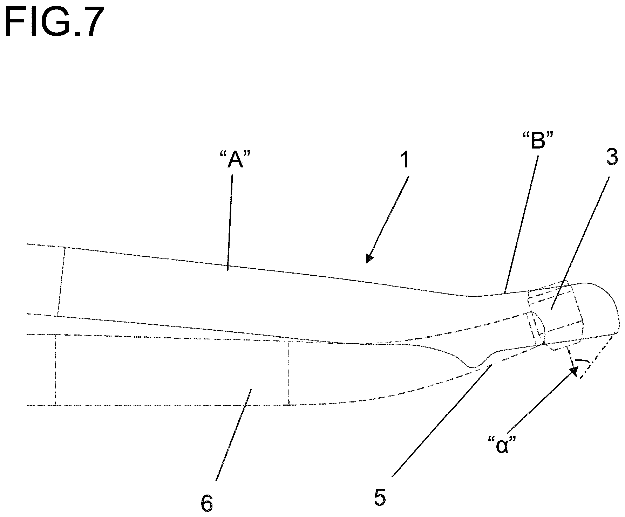

The distance "d", or width of the lower wall 7 of the distal tubular portion "B" of the suction body, 1 is sized to absorb fluid deflections forming an angle "α" between 30° and 60° with the axis of the drill 6a or dental laser tip (see figure 7). In particular, the distance "d" is equal to or greater than 2 mm, preferably between 3 mm and 9 mm, or, advantageously, between 4 mm and 8 mm, as is the case in the embodiment shown in the figures (see figure 8).

It has been observed that these distances are adequate to provide an extended perimeter suction area that can very efficiently approach the site of projected fluid deflections and ejection of liquids and solids, which are generated inside the oral cavity by the effect of the drill 6a or dental laser, avoiding the leakage of aerosols in the anterior and posterior part of the distal portion "B" of the device.

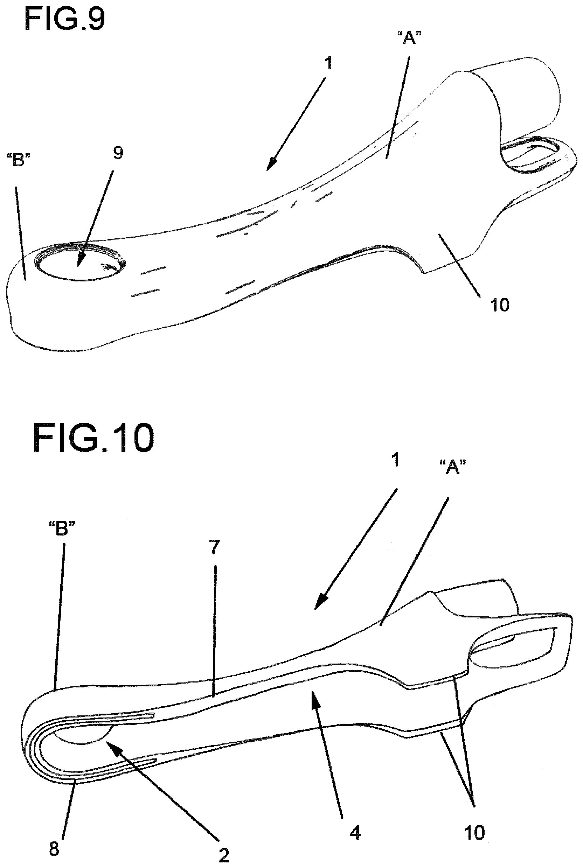

As regards the suction orifices 8 themselves, it should be mentioned that these may be configured as through slots in the lower wall 7 of the distal tubular portion "B" of the suction body 1, as shown in figure 10 of the second embodiment.

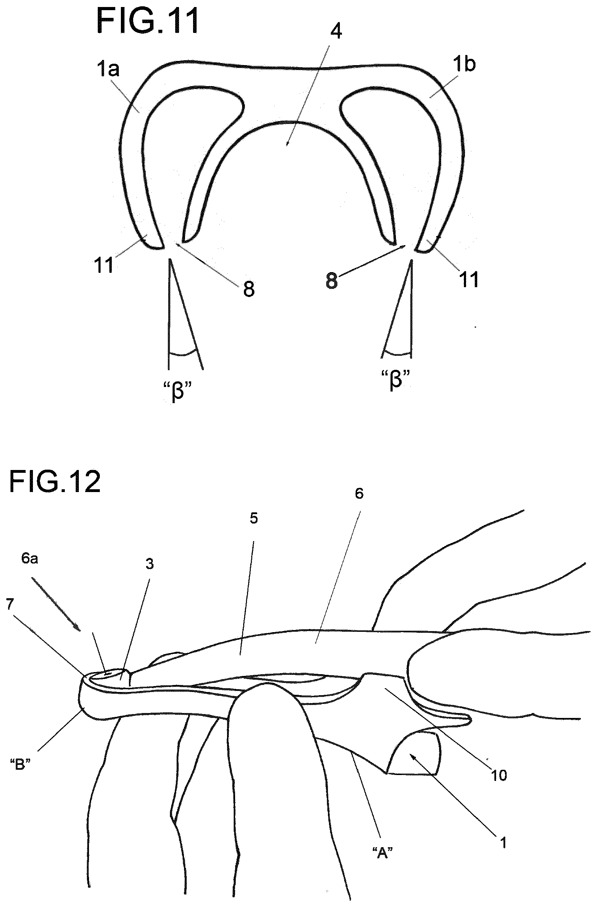

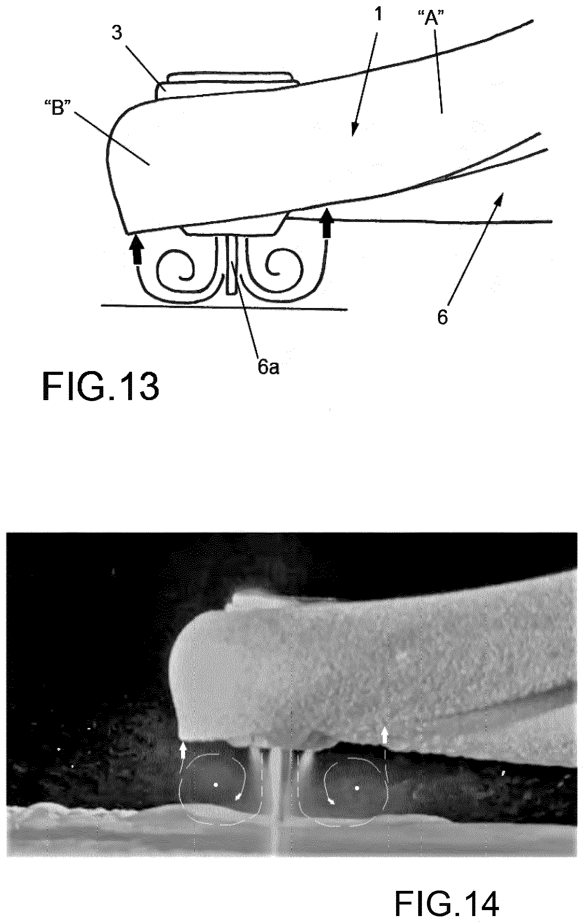

Preferably, the cross section of these orifices or through suction slots 8 determines a fluid passage in the lower wall 7 which may be equal to or greater than 1 mm and, optionally, the cross section of the orifices or through slots 8 extending on both sides of the second outer cavity or outer housing 4 for receiving the handle 5 may include walls 11 oriented vertically in a radial direction (see figure 11), towards the area where the deflections would escape. This detail improves the control of aerosol leakage through the rear part of the instrument by favouring a vacuum effect and the maintenance in this rear area of the stable toroidal suction vortex (see figures 13 and 14).

In what follows the operation of the claimed device is described with reference to a dental instrument, which may be, for example, a dental turbine 6 provided with a working head 3 comprising a drill 6a and pressurised water and air injection means for injecting a pressurised jet of cooling fluid. Dental turbines of this type are available on the market, such as those marketed under the brand names Kaltenbach & Voigt ^{®}, NSK^{®}, or B&W^{®}. Such dental turbines 6 include a rotor, which is preferably driven by air compression at a speed of between 100,000 and 500,000 revolutions per minute, and a support handle 5 through which the air, water and electricity supply lines extend to the working head 3.

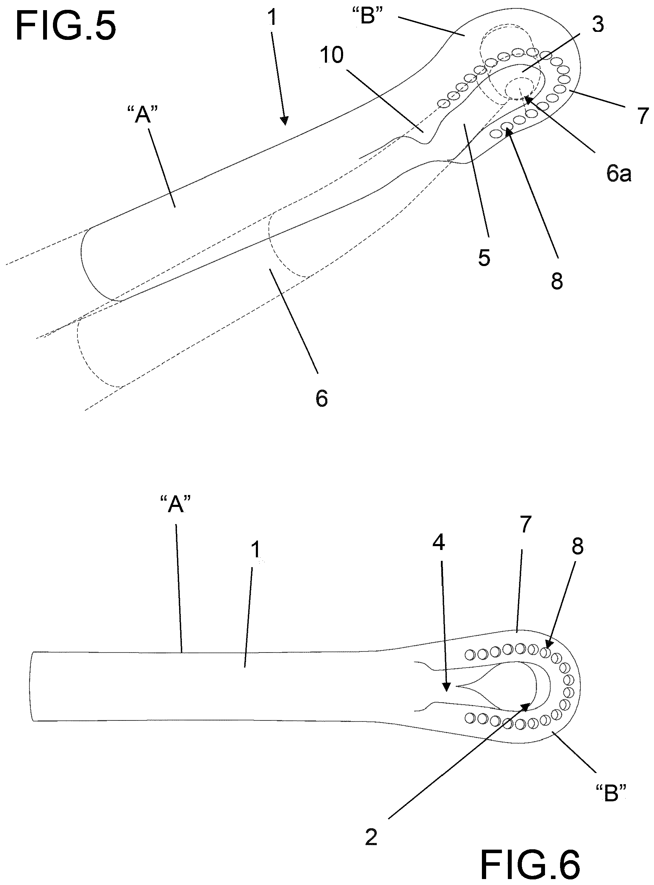

When the operator needs to carry out dental work with a dental turbine 6 as described in the previous paragraph, the device claimed is coupled first to the support handle 5 of the turbine 6, so that the working head 3 is housed inside the first outer cavity or outer housing 2 of the tubular suction body 1, and a portion of the support handle 5 itself is also housed in the second outer cavity or outer housing 4 formed by the same suction body 1. In the embodiments described, the tubular suction body 1 is coupled to the support handle 5 by means of projections 10 provided in the proximal portion "A" of the tubular body 1 which are clipped to the support handle 5 of the dental turbine 6 (see figures 5 and 12).

As can be seen in figures 5 and 12, in the coupled position of the device the lower wall 7 of the distal tubular portion "B" of the suction body 1, which includes the orifices 8 or suction through slots, surrounds the working head 3 and extends towards the rear, covering a part of the perimeter of the housing 4 in which the support handle 5 is housed. The height of the distal tubular portion "B", and in particular that of the tubular branches or body 1a, 1b, is substantially equivalent to the height of the head 3 supporting the drill 6a, which facilitates the handling of the device and dental instrument assembly inside the patient's oral cavity, and more importantly, allows the peripheral suction area determined by the orifices 8 or suction through slots to be brought closer to the place where aerosols and fluid deflections are generated.

When the operator operates the dental turbine 6 inside the oral cavity, the pressurised spray that cools the drill 6a carries with it, on its way to and from the tooth surface, all kinds of biological products, such as bioaerosols, blood, hard or soft dental tissue, serous or purulent secretions, bacteria, or viruses, among other products and residues. However, thanks to the device of the present invention, while the dental turbine 6 is in operation, the peripheral suction area of the distal tubular portion "B" of the suction body 1 of the device suctions very efficiently the fluid deflections and ejections of particles milled and dragged by the same fluid.

It has been observed that the trajectory of the fluid deflections and ejections of milled particles is substantially circumscribed within the extended perimeter suction area determined by the orifices 8 or suction pass-through slots surrounding the head 3 and part of the neck of the handle 5, forming a stable toroidal suction vortex of fluid with its centre in the drill 6a (see figures 13 and 14). Due to this, a very high percentage of these deflections and ejections are absorbed and controlled by the barrier effect generated, in the aforementioned enlarged peripheral area, by the toroidal vortex and the upwards suction.

An additional advantage of the device of the present invention lies in the fact that it makes it possible to dispense with the use of conventional suction cannulas which are manually positioned by an assistant in the vicinity of the dental turbine 6a. It has been observed that these cannulas cannot suction the totality of aerosols, or the splashes or deflections of fluid created by the presence of the cooling fluid of the drill 6a.

The claimed device has the advantage that it envelops the working area in such a way that the aerosols are very efficiently controlled, avoiding the usual leaks that occur with the use of the aforementioned cannulas. Furthermore, in the device of the present invention, the suction area is distributed peripherally, avoiding accidental deviations of cooling fluid that occur due to the lateral suction effect of the aforementioned cannulas. Accidental collisions with these are also eliminated.

Although reference has been made to specific embodiments of the invention applied to a dental turbine, it is obvious to a person skilled in the art that the dental suction device described is also capable of being applied or coupled to another dental instrument, such as, for example, a dental contra-angle handpiece or a dental laser. Thus, the claimed device is susceptible to numerous variations and modifications, so that aforementioned details can be replaced by technically equivalent ones without departing from the scope of protection defined by the appended claims.

## Claims

1. Dental suction device to be coupled to a dental instrument (6), the dental instrument (6) being provided with a drill (6a) or laser tip and injection means for injecting under pressure a jet of fluid comprising a mixture of air and water, wherein said dental suction device comprises:
- suction means for suctioning inside the oral cavity deflections of said fluid and aerosols produced by the effect of the drill (6a) or laser tip of the dental instrument (6), and
- attaching means for removably attaching said dental suction device to the dental instrument (6)
wherein said suction means comprise a tubular fluid suction body (1) forming a first outer housing (2) designed to receive a working head (3) of the dental instrument (6) at the outside of the tubular fluid suction body (1),
wherein a distal tubular portion ("B") of said tubular suction body (1) surrounds at least partially the perimeter of the first outer housing (2) for receiving the working head (3) of the dental instrument (6), and
- wherein a wall (7) of the distal tubular portion ("B") incorporates at least one suction orifice (8) arranged so as to determine a peripheral fluid suction area in an upward direction that at least partially surrounds the first outer housing (2) for receiving the working head (3), the distal tubular portion ("B") of the tubular suction body (1) being sized so that it can be introduced in the patient's mouth while the working head (3) of the dental instrument (6) is operating in the first outer housing (2) of the tubular suction body (1)

2. Dental suction device according to claim 1, wherein the at least one suction orifice (8) is provided in the wall (7) of the distal tubular portion ("B") so as to determine a peripheral fluid suction area in an upward direction substantially parallel to the axis of the drill (6a) or laser tip of the dental instrument.

3. Dental suction device according to any one of claims 1 to 2, wherein the wall (7) of the distal tubular portion ("B") extends radially outwards from the first outer housing (2) of the working head (3) with a width determined by a distance "d", said distance "d" being sized so as to absorb fluid deflections forming an angle "α" between 30° and 60° with the axis of the drill (6a) or laser tip of the head of the dental instrument (6).

4. Dental suction device according to claim 3, wherein the wall (7) of the distal tubular portion ("B") extends radially outwards from the outer receiving housing (2) of the working head (3) with a width determined by a distance "d" between 3 mm and 9 mm.

5. Dental suction device according to any one of claims 1 to 4, wherein said tubular suction body (1) comprises;
- a proximal tubular portion ("A") forming a second outer housing (4) intended to receive a handle (5) supporting the working head (3) of the dental instrument (6), and
- the distal tubular portion ("B") which at least partially surrounds the perimeter of the first outer housing (2) for receiving the working head (3).

6. Dental suction device according to claim 5, wherein said distal tubular portion ("B") extends on both sides of the second outer housing (4) for receiving the handle (5), in correspondence with the neck (5a) of the handle (5), the wall (7) of the distal tubular portion ("B") incorporating, on both sides of the second outer housing (4), one or more suction orifices (8).

7. Dental suction device according to any one of claims 1 or 6, wherein the distal tubular portion ("B") of said suction body (1) extends to surround the first outer housing (2) for receiving the head (3) so as to form a bifurcation ("Y") of tubular bodies (1a, 1b) forming an intermediate hollow space intended to define the first outer housing (2) for receiving the working head (3), said first outer housing (2) including an access hole (9) for accessing the upper part of the working head (3) and allowing to change the drill (6a) without the need to dislodge the working head (3).

8. Dental suction device according to any one of claims 1 to 7, wherein the cross-section of the at least one suction orifice (8) includes walls (11) of the orifice (8) vertically oriented in a radial direction towards the area where fluid deflections are generated.

9. Dental suction device according to any one of claims 1 to 8, when dependent on claim 5, wherein the at least one suction orifice (8) is configured as one or more fluid suction through slots provided in the wall (7) of the distal tubular portion ("B") of the tubular suction body (1), in such a way that said through slot or slots extend to determine the peripheral area of upward fluid suction that at least partially surrounds the perimeter of the first outer housing (2) for receiving the head (3) and at least partially surrounds the perimeter of the second outer housing (4) for receiving the handle (5), in the area in correspondence with the neck of the handle (5).

10. Dental suction device according to any one of claims 1 to 9, wherein the peripheral area of upward fluid suction increases or decreases towards the distal end of the dental suction device.

11. Dental suction device according to any one of claims 1 to 10, when dependent on claim 5, wherein the lumen of the suction tubular body (1) decreases in area from the proximal tubular portion ("A") towards the distal tubular portion ("B").

12. Dental suction device according to any one of claims 1 to 11, when dependent on claim 5, wherein the proximal tubular portion ("A") of the tubular suction body (1) comprises press-fit means for fitting the handle (5) of the dental instrument (6) inside the second outer housing (4) for receiving the handle (5).

13. Dental suction device according to any one of claims 1 to 12, comprising a source of vacuum production and means for connecting said source of vacuum production to the tubular suction body (1).

14. Dental suction device and instrument assembly (6), comprising a dental suction device according to any one of claims 1 to 13, and a dental turbine or dental contra-angle handpiece provided with a drill (6a) and injection means for injecting under pressure a fluid jet comprising a mixture of air and water capable of producing aerosols comprising milled particles in suspension from the tissues of the teeth, wherein the first outer housing (2) of the suction body (1) is shaped to receive the working head (3) of said dental turbine (6) or dental contra-angle handpiece.

15. Dental suction device and instrument assembly (6), comprising a dental suction device according to any one of claims 1 to 13, and a dental laser having a laser tip and injection means for injecting under pressure a jet of fluid comprising a mixture of air and water capable of producing aerosols comprising plumes of particles resulting from the ablation effect produced by the laser tip on tooth tissues, wherein the first outer housing (2) of the suction body (1) is shaped to receive the working head of said dental laser.

## Patentansprüche

1. Dentalsaugvorrichtung, die mit einem Dentalinstrument (6) zu koppeln ist, wobei das Dentalinstrument (6) mit einem Bohrer (6a) oder einer Laserspitze und Einspritzmitteln zum Einspritzen unter Druck eines Fluidstrahls, umfassend ein Gemisch von Luft und Wasser, versehen ist, wobei die Dentalsaugvorrichtung umfasst:
- Saugmittel zum Ansaugen von Ablenkungen des Fluids und von Aerosolen, die durch die Wirkung des Bohrers (6a) oder der Laserspitze des Dentalinstruments (6) erzeugt werden, im Inneren der Mundhöhle, und
- Befestigungsmittel zum abnehmbaren Befestigen der Dentalsaugvorrichtung an dem Dentalinstrument (6),
wobei die Saugmittel einen röhrenförmigen Fluidsaugkörper (1) umfassen, der ein erstes Außengehäuse (2) bildet, das ausgelegt ist, einen Arbeitskopf (3) des Dentalinstruments (6) an der Außenseite des röhrenförmigen Fluidsaugkörpers (1) aufzunehmen,
wobei ein distaler, röhrenförmiger Abschnitt ("B") des röhrenförmigen Saugkörpers (1) den Umfang des ersten Außengehäuses (2) zum Aufnehmen des Arbeitskopfs (3) des Dentalinstruments (6) zumindest teilweise umgibt und
wobei eine Wand (7) des distalen, röhrenförmigen Abschnitts ("B") mindestens eine Saugöffnung (8) aufweist, die derart angeordnet ist, um einen peripheren Fluidansaugbereich in einer Richtung nach oben zu bestimmen, der das erste Außengehäuse (2) zum Aufnehmen des Arbeitskopfs (3) zumindest teilweise umgibt, wobei der distale, röhrenförmige Abschnitt ("B") des röhrenförmigen Saugkörpers (1) derart bemessen ist, dass er in den Mund eines Patienten eingeführt werden kann, während der Arbeitskopf (3) des Dentalinstruments (6) in dem ersten Außengehäuse (2) des röhrenförmigen Saugkörpers (1) arbeitet.

2. Dentalsaugvorrichtung nach Anspruch 1, wobei die mindestens eine Saugöffnung (8) derart in der Wand (7) des distalen, röhrenförmigen Abschnitts ("B") vorgesehen ist, um einen peripheren Fluidansaugbereich in einer Richtung nach oben im Wesentlichen parallel zur Achse des Bohrers (6a) oder der Laserspitze des Dentalinstruments zu bestimmen.

3. Dentalsaugvorrichtung nach einem der Ansprüche 1 bis 2, wobei sich die Wand (7) des distalen, röhrenförmigen Abschnitts ("B") von dem ersten Außengehäuse (2) des Arbeitskopfs (3) mit einer Breite, die durch einen Abstand "d" bestimmt wird, radial nach außen erstreckt, wobei der Abstand "d" derart bemessen ist, um Fluidablenkungen, die einen Winkel "α" zwischen 30° und 60° mit der Achse des Bohrers (6a) oder der Laserspitze des Kopfs des Dentalinstruments (6) bilden, zu absorbieren.

4. Dentalsaugvorrichtung nach Anspruch 3, wobei sich die Wand (7) des distalen, röhrenförmigen Abschnitts ("B") von dem äußeren aufnehmenden Gehäuse (2) des Arbeitskopfs (3) mit einer Breite, die durch einen Abstand "d" zwischen 3 mm und 9 mm bestimmt wird, radial nach außen erstreckt.

5. Dentalsaugvorrichtung nach einem der Ansprüche 1 bis 4, wobei der röhrenförmige Saugkörper (1) umfasst:
- einen proximalen, röhrenförmigen Abschnitt ("A"), der ein zweites Außengehäuse (4) bildet, das dafür vorgesehen ist, einen Griff (5) aufzunehmen, der den Arbeitskopf (3) des Dentalinstruments (6) trägt, und
- den distalen, röhrenförmigen Abschnitt ("B"), der den Umfang des ersten Außengehäuses (2) zum Aufnehmen des Arbeitskopfs (3) zumindest teilweise umgibt.

6. Dentalsaugvorrichtung nach Anspruch 5, wobei sich der distale, röhrenförmige Abschnitt ("B") in Entsprechung mit dem Hals (5a) des Griffs (5) auf beiden Seiten des zweiten Außengehäuses (4) zum Aufnehmen des Griffs (5) erstreckt, wobei die Wand (7) des distalen, röhrenförmigen Abschnitts ("B") auf beiden Seiten des zweiten Außengehäuses (4) eine oder mehrere Saugöffnungen (8) aufweist.

7. Dentalsaugvorrichtung nach einem der Ansprüche 1 oder 6, wobei sich der distale, röhrenförmige Abschnitt ("B") des Saugkörpers (1) derart erstreckt, um das erste Außengehäuse (2) zum Aufnehmen des Kopfs (3) zu umgeben, derart, um eine Verzweigung ("Y") von röhrenförmigen Körpern (1a, 1b) zu bilden, die einen Zwischenhohlraum bilden, der dafür vorgesehen ist, das erste Außengehäuse (2) zum Aufnehmen des Arbeitskopfs (3) zu definieren, wobei das erste Außengehäuse (2) ein Zugriffsloch (9) zum Zugreifen auf den oberen Abschnitt des Arbeitskopfs (3) und Ermöglichen, den Bohrer (6a) zu wechseln, ohne die Notwendigkeit, den Arbeitskopf (3) zu entfernen, aufweist.

8. Dentalsaugvorrichtung nach einem der Ansprüche 1 bis 7, wobei der Querschnitt der mindestens einen Saugöffnung (8) Wände (11) der Öffnung (8) enthält, die in einer radialen Richtung zu dem Bereich, wo Fluidablenkungen erzeugt werden, hin vertikal orientiert sind.

9. Dentalsaugvorrichtung nach einem der Ansprüche 1 bis 8, wenn abhängig von Anspruch 5, wobei die mindestens eine Saugöffnung (8) als ein oder mehrere Fluidansaug-Durchgangsschlitze konfiguriert ist, die in der Wand (7) des distalen, röhrenförmigen Abschnitts ("B") des röhrenförmigen Saugkörpers (1) so bereitgestellt sind, dass sich der Durchgangsschlitz oder die Durchgangsschlitze derart erstrecken, um den peripheren Bereich zum Ansaugen des Fluids nach oben zu bestimmen, der den Umfang des ersten Außengehäuses (2) zum Aufnehmen des Kopfs (3) zumindest teilweise umgibt und den Umfang des zweiten Außengehäuses (4) zum Aufnehmen des Griffs (5) teilweise umgibt, in dem Bereich in Entsprechung mit dem Hals des Griffs (5)..

10. Dentalsaugvorrichtung nach einem der Ansprüche 1 bis 9, wobei der periphere Bereich zum Ansaugen des Fluids nach oben zu dem distalen Ende der Dentalsaugvorrichtung hin zunimmt oder abnimmt.

11. Dentalsaugvorrichtung nach einem der Ansprüche 1 bis 10, wobei, wenn abhängig von Anspruch 5, das Lumen des röhrenförmigen Saugkörpers (1) in einem Bereich von dem proximalen, röhrenförmigen Abschnitt ("A") zu dem distalen, röhrenförmigen Abschnitt ("B") hin abnimmt.

12. Dentalsaugvorrichtung nach einem der Ansprüche 1 bis 11, wobei, wenn abhängig von Anspruch 5, der proximale, röhrenförmige Abschnitt ("A") des röhrenförmigen Saugkörpers (1) Presspassungsmittel zum Einpassen des Griffs (5) des Dentalinstruments (6) im Inneren des zweiten Außengehäuses (4) zum Aufnehmen des Griffs (5) umfasst.

13. Dentalsaugvorrichtung nach einem der Ansprüche 1 bis 12, umfassend eine Quelle zur Vakuumerzeugung und Mittel zum Verbinden der Quelle zur Vakuumerzeugung mit dem röhrenförmigen Saugkörper (1).

14. Dentalsaugvorrichtung und Instrumentenanordnung (6), umfassend eine Dentalsaugvorrichtung nach einem der Ansprüche 1 bis 13 und eine Dentalturbine oder ein Dentalwinkelstück, versehen mit einem Bohrer (6a) und Einspritzmitteln zum Einspritzen unter Druck eines Fluidstrahls, der ein Gemisch von Luft und Wasser umfasst, was Aerosole erzeugen kann, umfassend zermahlene Teilchen in Suspension von den Geweben der Zähne, wobei das erste Außengehäuse (2) des Saugkörpers (1) derart geformt ist, um den Arbeitskopf (3) der Dentalturbine (6) oder des Dentalwinkelstücks aufzunehmen.

15. Dentalsaugvorrichtung und Instrumentenanordnung (6), umfassend eine Dentalsaugvorrichtung nach einem der Ansprüche 1 bis 13 und einen Dentallaser, der eine Laserspitze und Einspritzmittel zum Einspritzen unter Druck eines Fluidstrahls aufweist, der ein Gemisch von Luft und Wasser umfasst, was Aerosole erzeugen kann, umfassend Schwaden von Teilchen, die aus der Ablationswirkung, die durch die Laserspitze auf Zahngeweben erzeugt wird, resultieren, wobei das erste Außengehäuse (2) des Saugkörpers (1) derart geformt ist, um den Arbeitskopf des Dentallasers aufzunehmen.

## Revendications

1. Dispositif d'aspiration dentaire à coupler à un instrument dentaire (6), l'instrument dentaire étant pourvu d'une fraise (6a) ou d'une pointe laser et de moyens d'injection pour injecter sous pression un jet de fluide comprenant un mélange d'air et d'eau, dans lequel ledit dispositif d'aspiration dentaire comprend :
- des moyens d'aspiration pour aspirer à l'intérieur de la cavité buccale des déviations dudit fluide et des aérosols produits sous l'effet de la fraise (6a) ou de la pointe laser de l'instrument dentaire (6), et
- des moyens de fixation pour fixer de manière amovible ledit dispositif d'aspiration dentaire à l'instrument dentaire (6),
dans lequel lesdits moyens d'aspiration comprennent un corps d'aspiration de fluide tubulaire (1) formant un premier logement extérieur (2) conçu pour la réception d'une tête fonctionnelle (3) de l'instrument dentaire (6) au niveau de l'extérieur du corps d'aspiration de fluide tubulaire (1),
- dans lequel une partie tubulaire distale ("B") dudit corps d'aspiration tubulaire (1) entoure au moins partiellement le périmètre du premier logement extérieur (2) pour réception de la tête fonctionnelle (3) de l'instrument dentaire (6), et
- dans lequel une paroi (7) de la partie tubulaire distale ("B") incorpore au moins un orifice d'aspiration (8) agencé de manière à déterminer une zone d'aspiration de fluide périphérique dans une direction vers le haut qui entoure au moins partiellement le premier logement extérieur (2) pour réception de la tête fonctionnelle (3), la partie tubulaire distale ("B") du corps d'aspiration tubulaire (1) étant dimensionnée de manière à pouvoir être introduite dans la bouche du patient pendant que la tête fonctionnelle (3) de l'instrument dentaire (6) fonctionne dans le premier logement extérieur (2) du corps d'aspiration tubulaire (1).

2. Dispositif d'aspiration dentaire selon la revendication 1, dans lequel au moins un orifice d'aspiration (8) est prévu dans la paroi (7) de la partie tubulaire distale ("B") de manière à déterminer une zone d'aspiration de fluide périphérique dans une direction vers le haut sensiblement parallèle à l'axe de la fraise (6a) ou de la pointe laser de l'instrument dentaire.

3. Dispositif d'aspiration dentaire selon l'une quelconque des revendications 1 à 2, dans lequel la paroi (7) de la partie tubulaire distale ("B") s'étend radialement vers l'extérieur à partir du premier logement extérieur (2) de la tête fonctionnelle (3) avec une largeur déterminée par une distance "d", ladite distance "d" étant dimensionnée de manière à absorber des déviations de fluide formant un angle "α" compris entre 30° et 60° avec l'axe de la fraise (6a) ou de la pointe laser de la tête de l'instrument dentaire (6).

4. Dispositif d'aspiration dentaire selon la revendication 3, dans lequel la paroi (7) de la partie tubulaire distale ("B") s'étend radialement vers l'extérieur à partir du logement de réception extérieur (2) de la tête fonctionnelle (3) avec une largeur déterminée par une distance "d" comprise entre 3 mm et 9 mm.

5. Dispositif d'aspiration dentaire selon l'une quelconque des revendications 1 à 4, dans lequel ledit corps d'aspiration tubulaire (1) comprend :
- une partie tubulaire proximale (« A ») formant un second logement extérieur (4) destiné à recevoir un manche (5) supportant la tête fonctionnelle (3) de l'instrument dentaire (6), et
- la partie tubulaire distale ("B") qui entoure au moins partiellement le périmètre du premier logement extérieur (2) pour réception de la tête fonctionnelle (3).

6. Dispositif d'aspiration dentaire selon la revendication 5, dans lequel ladite partie tubulaire distale ("B") s'étend des deux côtés du second logement extérieur (4) pour réception du manche (5), en correspondance avec le col (5a) du manche (5), la paroi (7) de la partie tubulaire distale ("B") incorporant, des deux côtés du second logement extérieur (4), un ou plusieurs orifices d'aspiration (8).

7. Dispositif d'aspiration dentaire selon l'une quelconque des revendications 1 ou 6, dans lequel la partie tubulaire distale ("B") dudit corps d'aspiration (1) s'étend pour entourer le premier logement extérieur (2) pour réception de la tête (3) de manière à former une bifurcation ("Y") de corps tubulaires (1a, 1b) formant un espace creux intermédiaire destiné à définir le premier logement extérieur (2) pour réception de la tête fonctionnelle (3), ledit premier logement extérieur (2) incluant un trou d'accès (9) pour un accès à la partie supérieure de la tête fonctionnelle (3) et permettre de changer la fraise (6a) sans avoir besoin de déloger la tête fonctionnelle (3).

8. Dispositif d'aspiration dentaire selon l'une quelconque des revendications 1 à 7, dans lequel la section transversale du au moins un orifice d'aspiration (8) inclut des parois (11) de l'orifice (8) orientées verticalement dans une direction radiale vers la zone où des déviations de fluide sont générées.

9. Dispositif d'aspiration dentaire selon l'une quelconque des revendications 1 à 8, lorsqu'elle dépend de la revendication 5, dans lequel au moins un orifice d'aspiration (8) est configuré sous la forme d'une ou plusieurs fentes traversantes d'aspiration de fluide prévues dans la paroi (7) de la partie tubulaire distale ("B") du corps tubulaire d'aspiration (1), de telle sorte que ladite ou lesdites fentes traversantes s'étendent pour déterminer la zone périphérique d'aspiration de fluide vers le haut qui entoure au moins partiellement le périmètre du premier logement extérieur (2) pour réception de la tête (3) et entoure au moins partiellement le périmètre du second logement extérieur (4) pour réception du manche (5), dans la zone en correspondance avec le col du manche (5).

10. Dispositif d'aspiration dentaire selon l'une quelconque des revendications 1 à 9, dans lequel la zone périphérique d'aspiration de fluide vers le haut augmente ou diminue vers l'extrémité distale du dispositif d'aspiration dentaire.

11. Dispositif d'aspiration dentaire selon l'une quelconque des revendications 1 à 10, lorsqu'elle dépend de la revendication 5, dans lequel la lumière du corps tubulaire d'aspiration (1) diminue en surface depuis la partie tubulaire proximale ("A") vers la partie tubulaire distale ("B").

12. Dispositif d'aspiration dentaire selon l'une quelconque des revendications 1 à 11, lorsqu'elle dépend de la revendication 10, dans lequel la partie tubulaire proximale ("A") du corps d'aspiration tubulaire (1) comprend des moyens d'ajustement par pression pour ajuster le manche (5) de l'instrument dentaire (6) à l'intérieur du second logement extérieur (4) pour réception du manche (5).

13. Dispositif d'aspiration dentaire selon l'une quelconque des revendications 1 à 12, comprenant une source de production de vide et des moyens pour connecter ladite source de production de vide au corps d'aspiration tubulaire (1).

14. Ensemble de dispositif d'aspiration dentaire et d'instrument (6), comprenant un dispositif d'aspiration dentaire selon l'une quelconque des revendications 1 à 13, et une pièce à main de contre-angle dentaire ou de turbine dentaire pourvue d'une fraise (6a) et de moyens d'injection pour injecter sous pression un jet de fluide comprenant un mélange d'air et d'eau capable de produire des aérosols comprenant des particules broyées en suspension à partir des tissus des dents, dans lequel le premier logement extérieur (2) du corps d'aspiration (1) est formé pour réception de la tête fonctionnelle (3) de ladite pièce à main de contre-angle dentaire ou de turbine dentaire (6).

15. Ensemble de dispositif d'aspiration dentaire et d'instrument (6), comprenant un dispositif d'aspiration dentaire selon l'une quelconque des revendications 1 à 13, et un laser dentaire ayant une pointe de laser et des moyens d'injection pour injecter sous pression un jet de fluide comprenant un mélange d'air et d'eau capable de produire des aérosols comprenant des panaches de particules résultant de l'effet d'ablation produit par la pointe laser sur des tissus de dent, dans lequel le premier logement extérieur (2) du corps d'aspiration (1) est mis en forme pour réception de la tête fonctionnelle dudit laser dentaire.
